# EUROPÄISCHE PATENTANMELDUNG

(11) **EP 0 530 404 A1**
(43) Veröffentlichungstag der Anmeldung: **10.03.1993**
(21) Anmeldenummer: 91122053.1
(22) Anmeldetag: 21.12.1991
(51) Int. Cl.: F16L 33/207

(54) **Rohrverbindung**

(30) Priorität: 05.09.1991 DE 9110998 U
(71) Anmelder: Hewing GmbH, D-48607 Ochtrup (DE)
(72) Erfinder: Hansen, Jörg, W-4441 Wettringen (DE)
(74) Vertreter: Busse & Busse Patentanwälte

(57) **Zusammenfassung**

Die Erfindung bezieht sich auf eine Rohrverbindung mit einer Stützhülse 1 mit einem Bund 5 und einem oder mehreren Anschlußbereichen 2, von denen zumindest ein Anschlußbereich 2 für eine Preßverbindung mit einem Rohr 3 aus verpreßbarem Material ausgebildet ist, und mit einer Preßhülse 7 je Preßverbindung, die ein auf einen Anschlußbereich 2 aufgeschobenes Ende eines Rohres 3 umgreift und in Preßeingriff auf dem Anschlußbereich 2 fixiert. Um insbesondere eine schnelle und zuverlässige Prüfung der korrekten Aufschubstellung des Rohres 3 zu ermöglichen, weist die Rohrverbindung zumindest ein Kontrollmittel 9;11;12;14;15-22 je Preßverbindung auf, durch das die Lage des Rohrendes auf dem Anschlußbereich 2 überprüfbar ist.

## Beschreibung

Die Erfindung bezieht sich auf eine Rohrverbindung gemäß dem Oberbegriff des Anspruchs 1. Rohrverbindungen dieser Art sind beispielsweise durch das DE-GM G 90 16 310.9 bekannt.

Der Erfindung liegt die Aufgabe zugrunde, eine Rohrverbindung der genannten Art zu schaffen, die in der Preßendstellung der Teile eine schnelle und leichte Prüfung der korrekten Aufschubstellung des Endes des oder der zu verbindenden Rohre auf der Stützhülse ermöglicht.

Die Erfindung löst diese Aufgabe durch eine Rohrverbindung mit den Merkmalen des Anspruchs 1. Hinsichtlich wesentlicher weiterer Ausgestaltungen wird auf die Ansprüche 2 bis 21 verwiesen.

Die Rohrverbindung nach der Erfindung ermöglicht nach Abschluß der Preßverbindungsvorgänge jederzeit eine schnelle und zuverlässige Kontrolle der Lage des Rohrendes auf seinem Anschlußbereich, die darüber Aufschluß gibt, ob die Rohrverbindung vorschriftsmäßig erstellt wurde. Dies ist insbesondere im Falle von Reklamationen oder dann erwünscht, wenn Rohrverbindungen von Hilfskräften erstellt werden und einer routinemäßigen Nachkontrolle bedürfen.

Weitere Vorteile und Einzelheiten ergeben sich aus der nachfolgenden Beschreibung und der Zeichnung, in der drei Ausführungsbeispiele des Gegenstands der Erfindung näher veranschaulicht sind. In der Zeichnung zeigen:
- Fig. 1 - 4: eine erste Ausführung einer Rohrverbindung in unterschiedlichen Stadien ihrer Fertigstellung, und
- Fig. 5 u. 6: Darstellungen ähnlich Fig. 4 zur Veranschaulichung einer zweiten und dritten Ausführung einer Rohrverbindung nach der Erfindung.

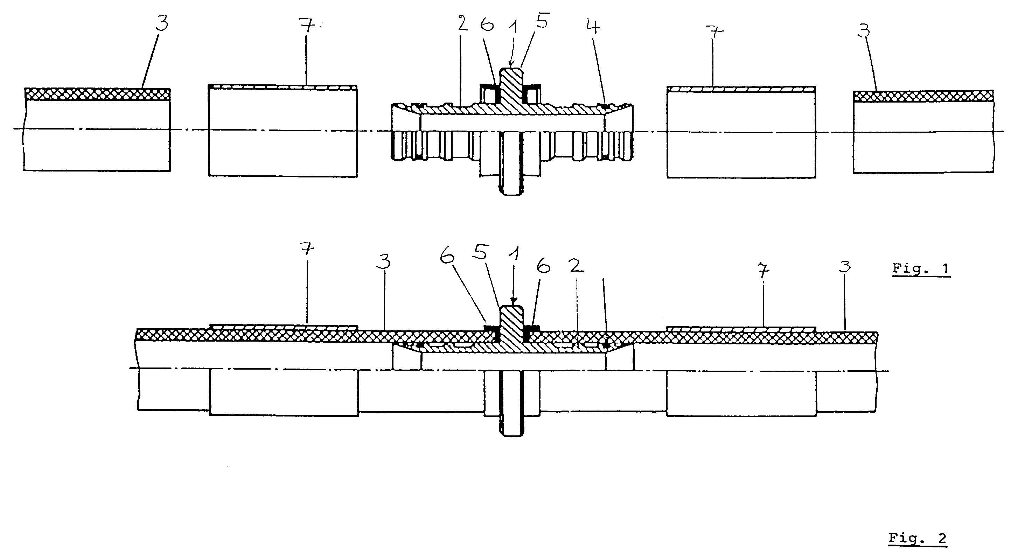

Die Zeichnung veranschaulicht in den Fig. 1 - 4 eine erste Ausführung einer Rohrverbindung jeweils im Halbschnitt und in Halbdraufsicht in unterschiedlichen Stadien der Montage. Die Rohrverbindung umfaßt im einzelnen eine Stützhülse 1 mit zwei Anschlußbereichen 2 untereinander gleicher, für eine Preßverbindung mit einem Rohr 3 außenseitig profilierter Ausbildung, auf deren nähere Ausgestaltung beispielsweise auf das deutsche Gebrauchsmuster 90 16 310 verwiesen werden kann. Anstelle von zwei Anschlußbereichen für Preßverbindungen kann die Rohrverbindung auch mit drei solchen Anschlußbereichen und/oder einem Anschlußbereich für sonstige Anwendungen, z.B. einem Schraubanschluß, versehen sein.

In den beiden Anschlußbereichen 2 kann zumindest ein O-Ring 4 vorgesehen sein. Zwischen den beiden Anschlußbereichen 2 befindet sich ein Bund 5, zu dessen beiden Seiten eine L-förmige Ringkappe 6, z.B. aus Tetrafluorethylen, vorgesehen ist. Statt eines L- kann die Ringkappe auch ein U-Profil oder eine sonst geeignete Profilierung haben. Schließlich gehören zur Rohrverbindung je eine Preßhülse 7 für jeden für eine Preßverbindung ausgebildeten Anschlußbereich 2.

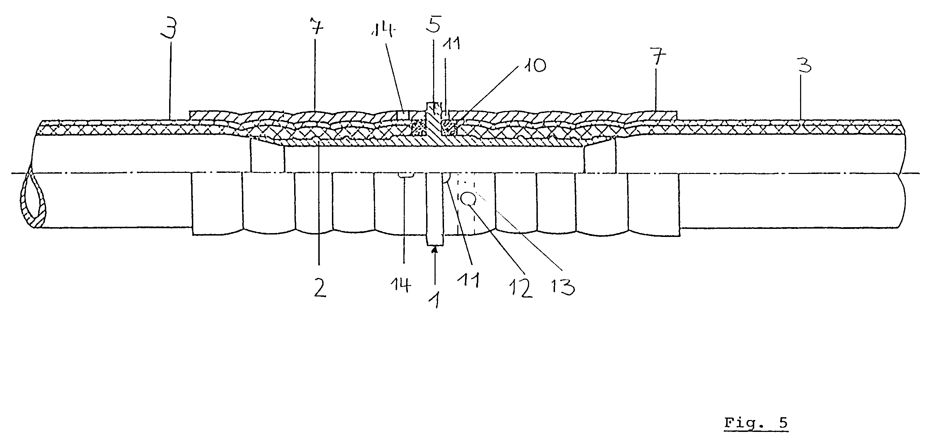

Die Rohre 3 bestehen aus einem verpreßbaren Material, beispielsweise Polyethylen in vernetzter oder unvernetzter Ausführung oder sonst geeigneten Kunststoffen. Anstelle einer einschichtigen Rohrausführung gemäß Fig. 1 - 4 kann auch ein Verbundmaterial für das Rohr 3 Verwendung finden, das beispielsweise aus einer inneren Rohrschicht aus Kunststoff, z.B. vernetztem Polyethylen, einer mittleren Schicht aus Aluminium und einer äußeren Schicht aus Kunststoff, z.B. vernetztem Polyethylen, bestehen kann. Auch zweischichtige Ausführungen, wie sie in Fig. 5 dargestellt sind, können Anwendung finden. Die Wahl der Materialien und die Gestaltung der Verbunde hängt von den Medien sowie deren Drücken und Temperaturen der Medien ab, die durch die Rohre 3 zu transportieren sind.

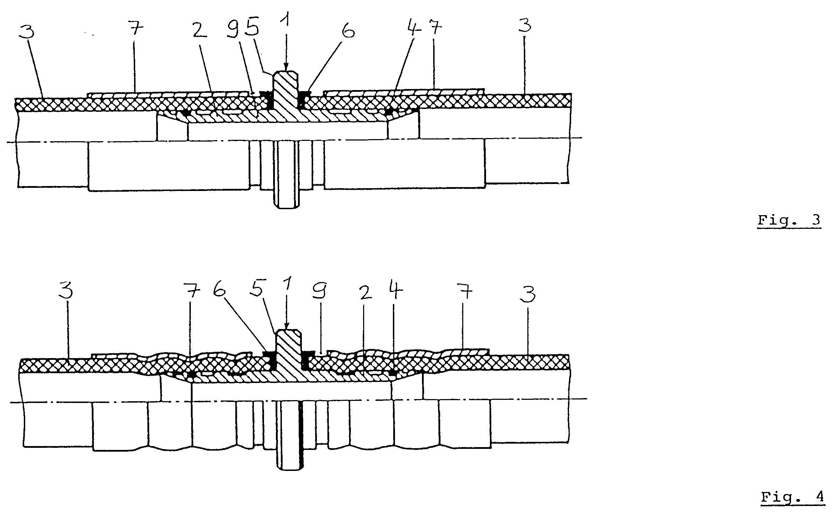

Zur Herstellung der Rohrverbindung werden ausgehend von den in Fig. 1 veranschaulichten Einzelteilen zunächst die Preßhülsen 7 auf die Enden der Rohre 3 und dann die Enden der Rohre 3 auf die Anschlußbereiche 2 der Stützhülse 1 aufgeschoben, bis, wie das die Fig. 2 veranschaulicht, die Stirnbereiche der Rohrenden in die Ringkappen 6 eingreifen. Danach werden die Preßhülsen 7 auf der Außenseite der Rohrenden über die Anschlußbereiche 2 in ihre Ausgangsstellung für eine Verpressung geschoben, wie sie in Fig. 3 veranschaulicht ist. In dieser Stellung der Teile verbleibt zwischen den Ringkappen 6 und den inneren Stirnflächen der Preßhülsen 7 ein Ringspalt 9, der eine Kontrollöffnung bildet und zu jedem Zeitpunkt nach der Fertigstellung der Rohrverbindung die Möglichkeit eröffnet, die korrekte Lage des Endes der Rohre 3 auf ihren Anschlußbereichen 2 zu überprüfen. Durch Verpressen der Preßhülsen 7 beispielsweise in der im deutschen Gebrauchsmuster 90 16 310 beschriebenen Weise erreicht die Rohrverbindung ihre Endform, welche die Fig. 4 veranschaulicht. In dieser Endstellung der Teile fixiert jede Preßhülse 7 das ihr zugeordnete, preßverformte Ende eines Rohres 3 auf dem von ihr umgriffenen Anschlußbereich 2.

Der Ringspalt kann eine über den Umfang unterschiedliche Breite aufweisen, beispielsweise von einer Breite Null auf eine maximale Breite ansteigen, wie das bei Begrenzung durch eine Stirnfläche der Fall sein kann, die durch einen Schrägabschnitt gebildet ist und mit ihrem einseitig vorstehenden Ende am Bund 5 oder an einer Ringkappe 6 anstößt.

Die Belassung eines vollen Ringspaltes 9 als Kontrollöffnung setzt eine entsprechende Positionierung der Preßhülse 7 voraus, die in manchen Fällen zu aufwendig oder unerwünscht sein kann. Einfacher in der Herstellung ist ein Anliegen der Preßhülse 7 in Verbindungsstellung der Teile am Bund 5. Als Kontrollöffnung ist in diesem Fall in der Preßhülse 7 im Bereich ihres dem Bund 5 benachbarten Endes zumindest eine radiale Durchgangsöffnung vorgesehen, wie dies die Fig. 5 veranschaulicht. Diese zeigt die Rohrverbindung nach ihrer Fertigstellung, in der die Enden der Rohre 3 stirnseitig an O-Ringen 10 und die Preßhülsen 7 stirnseitig am Bund 5 anliegen.

Die in Fig. 5 rechte Preßhülse 7 weist eine an ihre innere Stirnfläche angrenzende, sich mit dieser verschneidende Rundöffnung 11 auf, von der mehrere über den Umfang verteilt vorgesehen sein können. Sich mit der Stirnfläche der Rohrenden verschneidende Durchgangsöffnungen 11 können aber auch generell bogen-, kerb- und/oder langlochförmig ausgebildet sein. Derartige Durchgangsoffnungen 12 können auch der Stirnfläche nahe benachbart oder in einem zwischen dem Stirnabdichtungsbereich für das Rohrende und dem Preßverformungsbereich gelegenen Sichtbereich 13 angeordnet sein, der in der in Fig. 5 rechten Preßhülse 7 in deren unteren Hälfte gestrichelt angedeutet ist. Eine solche Anordnung ist bevorzugt, weil weder die Dichtungswirkung im stirnseitigen Abdichtungsbereich durch eine Verbindung zur Umgebung hin, noch die Verpressung des Rohrendes im Preßbereich der Preßhülse 7 beeinträchtigt wird.

In der in Fig. 5 linken Preßhülse 7 ist eine Durchgangsöffnung 14, von der ebenfalls mehrere über den Umfang verteilt vorgesehen sein können, veranschaulicht, die als axial ausgerichtete Schlitzöffnungen ausgebildet ist. Auch derartige Schlitzöffnungen 14, die gewünschtenfalls tangential oder schräg angeordnet sein können, befinden sich bevorzugt im Sichtbereich 13 zwischen dem Stirnabdichtungsbereich für das Rohrende und dem Preßverformungsbereich. Sofern, was bevorzugt ist, mehrere über den Umfang verteilte angeordnete Durchgangsöffnungen 11,12,14 vorgesehen sind, können diese jeweils in Umfangsrichtung fluchtend nebeneinander oder axial versetzt angeordnet werden, um Kontrollmöglichkeiten in axial zueinander versetzt gelegenen Stellen zu eröffnen.

Die Kontrollöffnungen 9,11,12,14 können so klein bzw. schmal gestaltet werden, daß sie lediglich den Durchgang einer Prüfsonde, z. B. einer Nadel, gestatten, mithin also Sondieröffnungen bilden. Stattdessen können die Kontrollöffnungen 9,11,12,14 so groß bzw. breit gestaltet sein, daß ohne Zuhilfename einer Prüfsonde oder eines Werkzeugs visuell sofort festgestellt werden kann, ob sich und wieweit unterhalb der Kontrollöffnung das Ende eines Rohres 3 befindet. Eine dritte Möglichkeit besteht darin, die Kontrollöffnungen 9,11,12,14 als Tastöffnung auszubilden, mithin so zu gestalten, daß beim Preßvorgang Material in die Kontrollöffnung über- und aus dieser nach außen hervortreten kann. Eine solche Tastöffnung bildet zugleich auch eine Sichtöffnung, was im umgekehrten Fall nicht zwingend der Fall ist.

In weiterer Abwandlung der dargestellten Ausführungsformen können beispielsweise um den Umfang herum verteilt mehrere Gruppen von einander nahe benachbarten Kontrollöffnungen vorgesehen sein, die axial zueinander versetzt sind und einen entsprechend axial vergrößerten Kontrollbereich erfassen.

In Fällen, in denen das Ende der Rohre 3 im Bereich der Stirnfläche keiner korrosionsvorbeugenden Abdichtung bedarf, können die Rohrenden auch (unter Fortfall der Ringkappen 6) bis unmittelbar an den Bund 5 der Stützhülse 1 herangeführt sein.

In Fällen besonders hoher Anforderungen an eine stirnflächige Abdichtung der Rohrenden kann bei entsprechender Vergrößerung der Ringkappen 6 in diesen ein O-Ring angeordnet werden, der sich bei Einführen der Rohrenden abdichtend vor die Stirnflächen der Rohrenden legt.

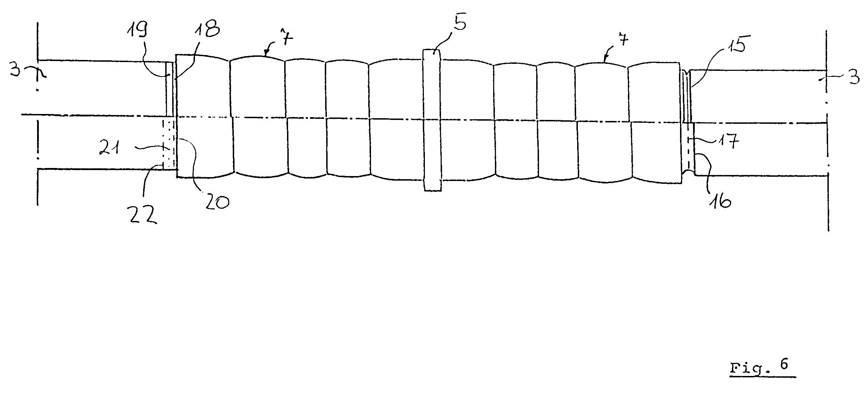

Die Fig. 6 veranschaulicht in einer weiteren Ausführungsform Kontrollmittel in Gestalt von auf dem Rohrende in vorgegebener Lage zur Stirnfläche des Rohrendes angebrachten Markierungen. Diese Markierungen, deren Anbringung nach dem die Stirnfläche erzeugenden Schneidvorgang erfolgt, sind vorzugsweise rundumlaufend ausgeführt, erstrecken sich jedoch zumindest über einen Teil des Rohrumfanges. Sie können von linien-, punkt- und/oder streifenförmigen Prägungen und/oder Farbaufträgen gebildet sein und sind in der Preßendstellung der Preßhülsen 7 deren rückwärtigen Ende benachbart und dabei zumindest teilweise sichtbar.

In Fig. 6 ist dem rückwärtigen Ende der rechten Preßhülse 7 im oberen Halbteil der Darstellung eine im Querschnitt keil- oder kerbförmige Prägung 15 als Markierung zugeordnet, die in einem erkennbaren Abstand zur rückwärtigen Stirnfläche der Preßhülse 7 gelegen ist und dadurch beispielsweise die Erkenntnis vermitteln kann, daß die Stirnfläche des Rohrendes in gleichem Abstand vor dem Bund 5 endet.

Im unteren Halbteil der Darstellung des Rohres 3 neben der rechten Preßhülse 7 ist eine Prägung 16 dargestellt, die einen bogenförmigen Querschnitt besitzt und mit ihrem in der Zeichnung linken Rand mit der rückwärtigen Stirnfläche der Preßhülse 7 fluchtet. Eine solche Markierung kann beispielsweise die Kenntnis vermitteln, daß die Stirnfläche des Rohrendes ordnungsgemäß am Bund 5 anliegt. Dies gilt dann, wenn die Prägung 6 mit ihrem der Stirnfläche des Rohrendes zugewandten Rand einen Abstand zur Stirnfläche hat, der der Länge der Preßhülse 7 entspricht. Eine im Grund der Prägung 16 angebrachte Farbmarkierung 17 in Form einer gestrichelten Linie kann als Sicherheit zusätzlich vorgesehen sein.

Dem rückwärtigen Ende der in der Zeichnung linken Preßhülse ist im oberen Halbteil der Darstellung ein streifenförmiger Farbauftrag zugeordnet, der aus einer Gruppe von zwei Streifen 18,19 besteht, von denen der Streifen 18 nur teilweise, hingegen der Streifen 19 in voller Breite sichtbar ist. Im unteren Halbteil der Darstellung des der linken Preßhülse 7 zugeordneten Rohres 3 ist eine andere Gruppe von drei axial nebeneinander auf dem Rohrende angebrachten Farbaufträgen veranschaulicht, die von einer gestrichelten Linie 20, einer Punktlinie 21 und einer strichpunktierten Linie 22 gebildet ist. Solche Gruppen von Markierungen schaffen einen axialen Markierungsbereich, der genaue Auskunft über die Lage des Endes des Rohres auf dem Anschlußbereich der Rohrverbindung vermitteln kann.

Markierungsprägungen oder Markierungsfarbaufträge werden zweckmäßig mit jenem Werkzeug auf dem Ende des Rohres aufgebracht, das zum Abschneiden des Rohrendes verwendet wird.

## Patentansprüche

1. Rohrverbindung mit einer Stützhülse (1) mit einem Bund (5) und einem oder mehreren Anschlußbereichen (2), von denen zumindest ein Anschlußbereich (2) für eine Preßverbindung mit einem Rohr (3) aus verpreßbarem Material ausgebildet ist, und mit einer Preßhülse (7) je Preßverbindung, die ein auf einen Anschlußbereich (2) aufgeschobenes Ende eines Rohres (3) umgreift und in Preßeingriff auf dem Anschlußbereich (2) fixiert, **dadurch gekennzeichnet,** daß die Rohrverbindung zumindest ein Kontrollmittel (9;11;12;14;15-22) je Preßverbindung aufweist, durch das die Lage des Rohrendes auf dem Anschlußbereich (2) überprüfbar ist.

2. Rohrverbindung nach Anspruch 1, **dadurch gekennzeichnet,** daß die Kontrollöffnung von einem Ringspalt zwischen der inneren Stirnfläche der Preßhülse (7) und dem Bund (5) gebildet ist.

3. Rohrverbindung nach Anspruch 1, **dadurch gekennzeichnet,** daß angrenzend an den Bund (5) eine profilierte, insbesondere L-förmige Ringkappe (6) für die abgedichtete Aufnahme des Stirnbereichs eines Rohrendes vorgesehen und die Kontrollöffnung von einem Ringspalt (9) zwischen der Ringkappe (6) und der inneren Stirnfläche der Preßhülse (7) gebildet ist.

4. Rohrverbindung nach Anspruch 2 oder 3, **dadurch gekennzeichnet,** daß der Ringspalt eine über den Umfang unterschiedliche Breite aufweist.

5. Rohrverbindung nach Anspruch 4, **dadurch gekennzeichnet,** daß der Spalt von einer durch einen Schrägabschnitt des Rohrendes gebildeten schrägverlaufenden, einseitig am Bund (5) oder an der Ringkappe (6) anliegenden Stirnfläche des Rohrendes begrenzt ist.

6. Rohrverbindung nach Anspruch 1, **dadurch gekennzeichnet,** daß die Preßhülse (7) in Verbindungsstellung der Teile am Bund (5) anliegt und im Bereich ihres dem Bund (5) benachbarten Endes mit zumindest einer radialen Durchgangsöffnung (11;12;14) als Kontrollöffnung versehen ist.

7. Rohrverbindung nach Anspruch 6, **dadurch gekennzeichnet,** daß die Preßhülse (7) mehrere über den Umfang verteilt angeordnete radiale Durchgangsöffnungen (11;12;14) aufweist.

8. Rohrverbindung nach Anspruch 6 oder 7, **dadurch gekennzeichnet,** daß die Durchgangsöffnung(en) (12,14) der inneren Stirnfläche der Preßhülse (7) nahe benachbart ist bzw. sind.

9. Rohrverbindung nach Anspruch 6 oder 7, **dadurch gekennzeichnet,** daß die Durchgangsöffnung(en) (12,14) in einem zwischen dem Stirnabdichtungsbereich für das Rohrende und dem Preßverformungsbereich gelegenen Sichtbereich (13) der Preßhülse (7) angeordnet ist bzw. sind.

10. Rohrverbindung nach Anspruch 6 oder 7, **dadurch gekennzeichnet,** daß die Durchgangsöffnung(en) (11) sich mit der Stirnfläche des Rohrendes verschneidet bzw. verschneiden.

11. Rohrverbindung nach Anspruch 10, **dadurch gekennzeichnet,** daß die Durchgangsöffnungen (11) von bogen-, kerb- oder langlochförmigen Einsenkungen in die Stirnfläche der Preßhülse gebildet sind.

12. Rohrverbindung nach einem der Ansprüche 6 bis 9, **dadurch gekennzeichnet,** daß die Durchgangsöffnung(en) als Rundöffnung(en) (12) ausgebildet ist bzw. sind.

13. Rohrverbindung nach einem der Ansprüche 6 bis 9, **dadurch gekennzeichnet,** daß die Durchgangsöffnung(en) als Schlitzöffnungen (14) ausgebildet sind.

14. Rohrverbindung nach einem der Ansprüche 1 bis 13, **dadurch gekennzeichnet,** daß die Kontrollöffnung(en) (9;11; 12;14) als Sondieröffnung(en) ausgebildet ist bzw. sind.

15. Rohrverbindung nach einem der Ansprüche 1 bis 13, **dadurch gekennzeichnet,** daß die Kontrollöffnung(en) (9;11; 12;14) als Sichtöffnung(en) ausgebildet ist bzw. sind.

16. Rohrverbindung nach einem der Ansprüche 1 bis 13 **dadurch gekennzeichnet,** daß die Kontrollöffnung(en) (9;11; 12;14) als Tastöffnung(en) ausgebildet ist bzw. sind.

17. Rohrverbindung nach Anspruch 1, **dadurch gekennzeichnet,** daß als Kontrollmittel eine auf dem Rohrende in vorgegebener Lage zur Stirnfläche des Rohrendes angebrachte Markierung (15-22) vorgesehen ist.

18. Rohrverbindung nach Anspruch 17, **dadurch gekennzeichnet,** daß die Markierung von einer Prägung (15,16) und/oder einem Farbauftrag (17-22) gebildet ist.

19. Rohrverbindung nach Anspruch 17 oder 18, **dadurch gekennzeichnet,** daß die Markierung (15-22) in der Preßendstellung der Teile dem rückwärtigen Ende der Preßhülse (7) benachbart und zumindest teilweise sichtbar ist.

20. Rohrverbindung nach einem der Ansprüche 17 bis 19, **dadurch gekennzeichnet,** daß jede Markierung aus einer Gruppe (16,17;18,19;20,21,22) von axial nebeneinander auf dem Rohrende angebrachten, sich zumindest über einen Teil des Rohrumfangs erstreckenden Prägungen (15,16) und/oder Farbaufträgen (17-22) besteht.

21. Rohrverbindung nach einem der Ansprüche 17 bis 20, **dadurch gekennzeichnet,** daß die Markierung von linien-, punkt- und/oder streifenförmigen Prägungen (15,16) und/oder Farbaufträgen (17-22) besteht.
